# EUROPÄISCHE PATENTANMELDUNG

(11) **EP 4 729 818 A1**
(43) Veröffentlichungstag der Anmeldung: **22.04.2026**
(21) Anmeldenummer: 25202468.2
(22) Anmeldetag: 16.09.2025
(51) Int. Cl.: F16K 37/00

(54) **EINBAUHILFE FÜR PROZESSVENTILKÖRPER UND VERFAHREN ZUM BETREIBEN DER EINBAUHILFE**

(30) Priorität: 11.10.2024 DE 102024129516
(71) Anmelder: GEMÜ Gebr. Müller Apparatebau GmbH & Co. Kommanditgesellschaft, 74653 Ingelfingen (DE)
(72) Erfinder: Bauer, Maximilian, 74670 Forchtenberg (DE); Mager, Marcus, 74906 Bad Rappenau (DE); Renner, Maximilian, 74706 Osterburken (DE); Matter, Simon, 74747 Ravenstein (DE)
(74) Vertreter: DREISS Patentanwälte PartG mbB

(57) **Zusammenfassung**

Eine Einbauhilfe (100) für Prozessventilkörper (200) umfasst: eine Sensoreinheit (110), welche dazu eingerichtet ist, eine aktuelle Lage (L) der Einbauhilfe (100) im Raum zu ermitteln; eine Steuereinheit (120), welche dazu eingerichtet ist, wenigstens ein Ausgangssignal (O) zu ermitteln, welches zumindest einen Grad der Übereinstimmung einer Soll-Lage (Lset) der Einbauhilfe (100) im Raum mit der aktuellen Lage (L) der Einbauhilfe (100) im Raum charakterisiert und/oder welches zumindest eine Lagekorrektur-Anweisung zum Erreichen der Soll-Lage (Lset) der Einbauhilfe (100) im Raum charakterisiert, in Abhängigkeit von der aktuellen Lage (L) der Einbauhilfe (100) im Raum und der Soll-Lage (Lset) der Einbauhilfe (100) im Raum; und eine Ausgabeeinheit (130), welche dazu eingerichtet ist, das Ausgangssignal (O) auszugeben, um den zumindest einen Grad der Übereinstimmung der Soll-Lage (Lset) mit der aktuellen Lage (L) und/oder die zumindest eine Lagekorrektur-Anweisung zum Erreichen der Soll-Lage (Lset) an einen Nutzer der Einbauhilfe (100) weiterzugeben.

## Beschreibung

Die Erfindung betrifft eine Einbauhilfe und ein Verfahren zum Betreiben derselben. Die Einbauhilfe ist dafür ausgebildet, um bei dem Einbau des Prozessventilkörpers zu unterstützen.

Die Probleme des Standes der Technik werden durch eine Einbauhilfe gemäß dem Anspruch 1 sowie durch ein Verfahren gemäß einem nebengeordneten Anspruch gelöst. Vorteilhafte Weiterbildungen finden sich in den Unteransprüchen sowie in der nachfolgenden Beschreibung von Beispielen.

Ein erster Aspekt der Beschreibung betrifft eine Einbauhilfe für Prozessventilkörper. Diese umfasst eine Sensoreinheit, welche dazu eingerichtet ist, eine aktuelle Lage der Einbauhilfe im Raum zu ermitteln. Die Einbauhilfe umfasst eine Steuereinheit, welche dazu eingerichtet ist, wenigstens ein Ausgangssignal zu ermitteln, welches zumindest einen Grad der Übereinstimmung einer Soll-Lage der Einbauhilfe im Raum mit der aktuellen Lage der Einbauhilfe im Raum charakterisiert und/oder welches zumindest eine Lagekorrektur-Anweisung zum Erreichen der Soll-Lage der Einbauhilfe im Raum charakterisiert, in Abhängigkeit von der aktuellen Lage der Einbauhilfe im Raum und der Soll-Lage der Einbauhilfe im Raum. Die Einbauhilfe umfasst eine Ausgabeeinheit, welche dazu eingerichtet ist, das Ausgangssignal auszugeben, um den zumindest einen Grad der Übereinstimmung der Soll-Lage mit der aktuellen Lage und/oder die zumindest eine Lagekorrektur-Anweisung zum Erreichen der Soll-Lage an einen Nutzer der Einbauhilfe weiterzugeben.

Eine Anforderung an den Einbau von Prozessventilkörpern in eine Prozessanlage ist, dass der wenigstens eine Fluidkanal innerhalb des Prozessventils im Betrieb der Prozessanlage selbstständig leerläuft. Die Geometrie des Fluidkanals, die vom Prozessventilkörper und dem Prozessventil bereitgestellt wird, umfasst Taschen bzw. Ausnehmungen innerhalb des Fluidkanals, die in bestimmten Einbaulagen dazu führen können, dass dort selbst bei einem Ablassen des Prozessfluids aus der Anlage Reste von Prozessfluid verbleiben. Dies ist unerwünscht. Es gibt deshalb herstellerseitige Vorgaben, was die Einbaulage des jeweiligen Prozessventilkörpers angeht. Diese Vorgaben hängen vom jeweiligen Typ des Prozessventilkörpers ab und sind unterschiedlich, um zu garantieren, dass der Prozessventilkörper so eingebaut wird, dass er selbstständig leerläuft.

Durch die vorgeschlagene Einbauhilfe wird der Einbau des Prozessventilkörpers deutlich vereinfacht, da die vorgegebene Soll-Lage vom Nutzer, d.h. dem Monteur, durch manuelle Positionierung im Raum zu jedem Zeitpunkt überprüft und anschließend bei der Festlegung, d.h. Einschweißen an Rohre, kontrolliert werden kann. Es wird so nicht nur Montagezeit eingespart, sondern auch die Leerlaufeigenschaft bei korrekter Anwendung dauerhaft garantiert.

Ein vorteilhaftes Beispiel zeichnet sich dadurch aus, dass die Einbauhilfe umfasst: eine Verbindungsvorrichtung zur lösbaren mechanischen Verbindung mit dem Prozessventilkörper, wobei die Verbindungsvorrichtung wenigstens eine mechanische Struktur umfasst, die eine Kopplung der Einbauhilfe mit dem Prozessventilkörper ausschließlich in einer oder zwei vorbestimmten Positionen zueinander ermöglicht.

Damit wird ein System gemäß Poka Yoke geschaffen, damit Fehlbedienungen ausgeschlossen und der Aufbau und Betrieb der Prozessanlage ohne Beeinträchtigungen erfolgt.

Bei symmetrisch aufgebauten Prozessventilkörpern, deren Prozessfluidkanal entlang einer gedachten gemeinsamen Achse verläuft, können zwei vorbestimmte Positionen zugelassen werden, da die Leerlaufbedingungen in beide Richtungen gleich sind.

Bei unsymmetrischen Prozessventilkörpern hingegen ist es notwendig, dass nur eine vorbestimmte Position zugelassen wird, da durch eine unsymmetrische Fluidkanalausbildung die Leerlaufbedingungen nur in einer Lage oder einem Lageraum gelten.

Ein vorteilhaftes Beispiel zeichnet sich dadurch aus, dass die Einbauhilfe eine Eingabeeinheit umfasst, welche dazu eingerichtet ist, die Soll-Lage der Einbauhilfe im Raum vorzugeben.

Vorteilhaft kann so Prozessventilkörper-individuell die Soll-Lage vorgegeben werden, was den Einsatzbereich der Einbauhilfe auf eine Reihe unterschiedlicher Prozessventilkörper ausdehnt.

Ein vorteilhaftes Beispiel zeichnet sich dadurch aus, dass die Eingabeeinheit einen Leser umfasst, welcher dazu eingerichtet ist, Daten eines in der Nähe des Lesers befindlichen Tags, welcher insbesondere am Prozessventilkörper angeordnet ist oder in einem vorab definierten Katalog von Prozessventilkörpern abgebildet ist, drahtlos auszulesen und in Abhängigkeit von den ausgelesenen Daten die Soll-Lage für die Einbauhilfe vorzugeben.

Vorteilhaft kann der Nutzer den Leser in die Nähe des Ventilkörpers und des dort angeordneten Tags bringen und damit wird die Soll-Lage für die Einbauhilfe und damit die Soll-Lage des Ventilkörpers in der Einbauhilfe berücksichtigt.

Ein vorteilhaftes Beispiel zeichnet sich dadurch aus, dass die Eingabeeinheit eine Drahtlos-Schnittstelle umfasst, um die Soll-Lage von einem insbesondere tragbaren Kommunikations- und Rechengerät drahtlos zu empfangen.

Vorteilhaft kann damit mittels eines Smartphones oder eines Tablets, alternativ mit einem PC via WLAN die Soll-Lage manuell vorgegeben werden. Damit erweitert sich der Einsatzbereich auf Ventile bzw. Ventilkörper aller Hersteller.

Ein vorteilhaftes Beispiel zeichnet sich dadurch aus, dass die Eingabeeinheit dazu eingerichtet ist, einen Bestätigungsbefehl weiterzuleiten oder zu generieren, wobei die Steuereinheit dazu eingerichtet ist, um bei Vorliegen des Bestätigungsbefehls die aktuelle Lage der Einbauhilfe im Raum als finale Einbaulage des Prozessventilkörpers in einer Speichereinheit abzuspeichern und/oder mittels der Ausgangseinheit, insbesondere mittels einer Drahtlos-Schnittstelle, an eine entfernt angeordnete Einheit zu senden.

Vorteilhaft kann die Einbauhilfe dazu genutzt werden, um den Einbauprozess des Ventilkörpers abzuschließen, indem die aktuelle Lage der Einbauhilfe im Raum als die Einbaulage des Prozessventilkörpers abgespeichert und/oder mittels einer Drahtlos-Schnittstelle an eine entfernte Einheit versendet wird. Vorteilhaft erfolgt so eine Dokumentation der Montagearbeiten und die Einbaulage kann mit Soll-Daten abgeglichen werden.

Ein vorteilhaftes Beispiel zeichnet sich dadurch aus, dass die Eingabeeinheit einen Taster umfasst, welcher bei manueller Betätigung den Bestätigungsbefehl erzeugt.

Vorteilhaft ist der Abschluss der Arbeiten für den Monteur einfach durchführbar.

Ein vorteilhaftes Beispiel zeichnet sich dadurch aus, dass die Eingabeeinheit einen Temperatursensor umfasst, welcher eine Temperatur der Einbauhilfe oder im Bereich des Prozessventilkörpers erfasst, wobei die Eingabeeinheit dazu eingerichtet ist, um bei Überschreiten eines vorgegebenen Temperatur-Schwellwerts durch die vom Temperatursensor erfasste Temperatur den Bestätigungsbefehl zu generieren.

Der Einschweißprozess geht mit einer Erhöhung der Temperatur des Prozessventilkörpers einher, womit diese Temperaturerhöhung als Bestätigung interpretiert wird, um die tatsächliche Einbaulage zu ermitteln.

Ein vorteilhaftes Beispiel zeichnet sich dadurch aus, dass die Eingabeeinheit den Bestätigungsbefehl mittels einer Drahtlosschnittstelle drahtlos von einem insbesondere tragbaren Kommunikations- und Rechengerät empfängt.

Vorteilhaft bietet das insbesondere tragbare Kommunikations- und Rechengerät die Möglichkeit die Schnittstelle zum Monteur/Schweißer wie gewünscht zu gestalten, um die Eingabe zu vereinfachen und ggf. weitere Daten zu erfassen.

Ein vorteilhaftes Beispiel zeichnet sich dadurch aus, dass die Ausgabeeinheit eine Drahtlos-Schnittstelle aufweist, welche dazu eingerichtet sind, um das Ausgabesignal, das den Grad der Übereinstimmung der Soll-Lage mit der aktuellen Lage und/oder die Lagekorrektur-Anweisung zum Erreichen der Soll-Lage der Einbauhilfe im Raum indiziert, an ein insbesondere tragbares Kommunikations- und Rechengerät zu senden.

Ein vorteilhaftes Beispiel zeichnet sich dadurch aus, dass die Ausgabeeinheit eine Mehrzahl von in einer gedachten Fläche angeordneten Lichtquellen und/oder ein Display aufweist, welche dazu eingerichtet sind, um in Abhängigkeit von dem wenigstens einen Ausgangssignal den Grad der Übereinstimmung der Soll-Lage mit der aktuellen Lage und/oder die Lagekorrektur-Anweisung zum Erreichen der Soll-Lage der Einbauhilfe im Raum durch Farben und/oder Lichtintensitäten anzuzeigen.

Vorteilhaft sind die so angeordneten und betriebenen Lichtquellen einfach ablesbar. Nach einer einfachen Einweisung ist es für den Monteur / Schweißer möglich, die sich wiederholenden Arbeiten zum Ausrichten und Einschweißen des Prozessventilkörpers sicher auszuführen.

Ein vorteilhaftes Beispiel zeichnet sich dadurch aus, dass die Sensoreinheit, die Steuereinheit und die Ausgabeeinheit, und insbesondere die Eingabeeinheit, einem Hauptmodul zugeordnet sind, wobei ein Adaptermodul die Verbindungsvorrichtung umfasst, wobei das Adaptermodul das Hauptmodul mit dem Prozessventilkörper verbindet.

Vorteilhaft ermöglicht das Adaptermodul, dass nur ein Typ von Hauptmodul gefertigt wird und lediglich das Adaptermodul für den jeweiligen Typ und die Größe des Prozessventilkörpers angepasst gefertigt werden muss.

Ein vorteilhaftes Beispiel zeichnet sich dadurch aus, dass die Verbindungsvorrichtung wenigstens einen Dichtabschnitt umfasst, welche derart eingerichtet ist, dass wenigstens eine Öffnung eines Fluidkanals des Prozessventilkörpers durch den zugeordneten Dichtabschnitt abgedichtet ist.

Vorteilhaft können so mit der Einbauhilfe oder mit dem Adaptermodul Dichtheitsprüfungen der Prozessanlage durchgeführt werden.

Ein vorteilhaftes Beispiel zeichnet sich dadurch aus, dass die Einbauhilfe einen Schutzgasanschluss aufweist, welcher über einen Fluidkanal mit einem Schutzgasauslass, welcher sich innerhalb des Dichtabschnitts befindet, verbunden ist.

Vorteilhaft kann somit Schutzgas in die Fluidleitung eingeleitet werden, um den Schweißprozess zu optimieren und die Schweißnaht vor schädlichen Einflüssen wie Oxidation zu schützen.

Ein zweiter Aspekt der Beschreibung betrifft den folgenden Gegenstand: Ein Verfahren zum Betreiben einer Einbauhilfe für Prozessventilkörper wobei das Verfahren umfasst: Ermitteln, mittels einer Sensoreinheit, einer aktuellen Lage der Einbauhilfe im Raum; Ermitteln, mittels einer Steuereinheit, wenigstens eines Ausgangssignals, welches zumindest einen Grad der Übereinstimmung einer Soll-Lage der Einbauhilfe im Raum mit der aktuellen Lage der Einbauhilfe im Raum charakterisiert und/oder welches zumindest eine Lagekorrektur-Anweisung zum Erreichen der Soll-Lage der Einbauhilfe im Raum charakterisiert, in Abhängigkeit von der aktuellen Lage der Einbauhilfe im Raum und der Soll-Lage der Einbauhilfe im Raum; und Ausgeben, mittels einer Ausgabeeinheit, des Ausgangssignals, um den zumindest einen Grad der Übereinstimmung der Soll-Lage mit der aktuellen Lage und/oder die zumindest eine Lagekorrektur-Anweisung zum Erreichen der Soll-Lage an einen Nutzer der Einbauhilfe weiterzugeben.

In der Zeichnung zeigen:
- Fig. 1: eine Einbauhilfe und zugeordnete Einheiten in einem schematischen Blockdiagramm;
- Fig. 2: ein Schnittbild der Einbauhilfe;
- Fig. 3: ein weiteres Schnittbild der Einbauhilfe; und
- Fig. 4: eine Draufsicht auf die Ausgabeeinheit der Einbauhilfe.

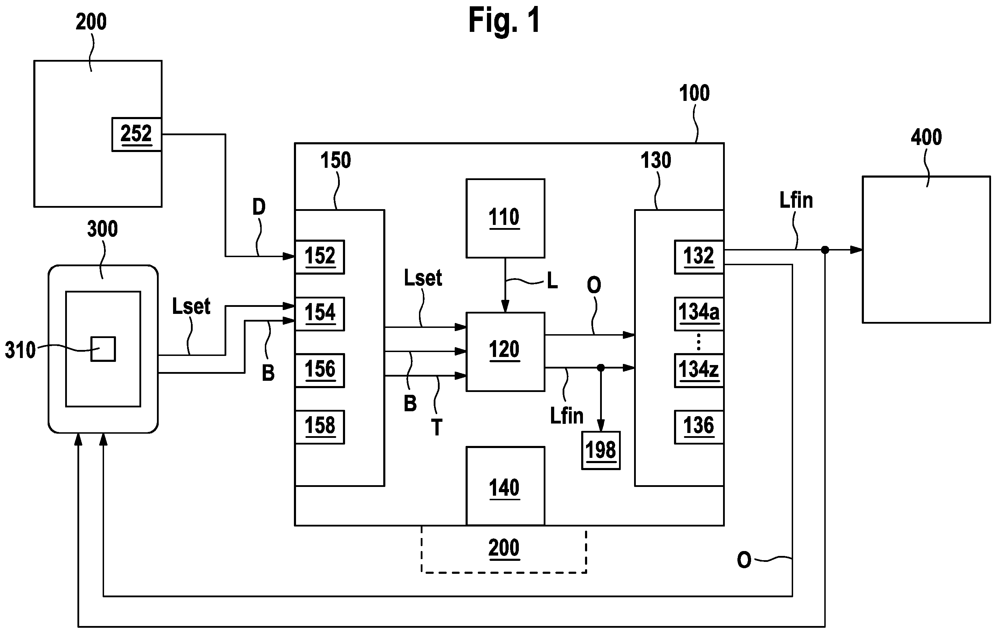

Figur 1 zeigt in einem schematischen Blockdiagramm eine Einbauhilfe 100 für Prozessventilkörper 200. Die Einbauhilfe 100 ist dazu ausgebildet, Hilfestellung bei der Anordnung des Prozessventilkörpers 200 in einer Prozessanlage zu bieten.

Bei dem Prozessventilkörper 200 kann es sich um einen Ventilkörper mit einem Eingang und einem Ausgang handeln. Selbstverständlich kann die Einbauhilfe 100 auch für Ventilblöcke verwendet werden, bei denen mehrere Eingänge mit mehreren Ausgängen verbunden sind, oder ein Eingang mit mehreren Ausgängen, oder mehrere Eingänge mit einem Ausgang.

Eine Sensoreinheit 110 der Einbauhilfe 100 ist dazu eingerichtet, eine aktuelle Lage L der Einbauhilfe 100 im Raum zu ermitteln. Die Lage L der Einbauhilfe 100 im Raum umfasst die Orientierung der Einbauhilfe 100 zur Horizontalen.

Als Sensoreinheit 110 wird beispielsweise eine inertiale Messeinheit IMU verwendet, um die Lage der Einbauhilfe 100 im Raum zu bestimmen, ohne auf externe Referenzsysteme angewiesen zu sein. Sie basiert ausschließlich auf der Messung von Bewegungen und Rotationen und kann daher vollständig autonom die räumliche Orientierung ermitteln. Ein Beschleunigungssensor misst die lineare Beschleunigung der Einbauhilfe 100 in drei orthogonalen Achsen. Die Komponente der Erdbeschleunigung Gravitation kann verwendet werden, um die Orientierung zur Vertikalen z. B. die Neigung zu bestimmen. Ein Gyroskop misst die Winkelgeschwindigkeit um die drei Hauptachsen der Vorrichtung. Dadurch kann die Drehbewegung / Rotation der Einbauhilfe 100 bestimmt werden, was es ermöglicht, die Orientierung im Raum fortlaufend zu berechnen. Da keine externe Referenz notwendig ist, sind Gyroskope besonders nützlich zur Verfolgung von Bewegungen ohne äußere Beeinflussung. Durch die Fusion der Daten des Beschleunigungssensors und des Gyroskops kann die Lage der Einbauhilfe 100 kontinuierlich und präzise bestimmt werden. Diese Fusion ermöglicht eine Vermeidung von Drift, die bei der alleinigen Verwendung von Gyroskopen entstehen kann, und eine genaue Verfolgung der Orientierung über längere Zeiträume hinweg.

Ein weiteres Beispiel für die Sensoreinheit 110 ist ein Neigungssensor, auch Inclinometer genannt. Der Neigungssensor misst direkt den Neigungswinkel der Einbauhilfe relativ zur Horizontalen. Der Sensor erfasst hierbei die Veränderung der Gravitation entlang einer Achse und berechnet den entsprechenden Neigungswinkel. Neigungssensoren können in einer oder mehreren Achsen arbeiten und liefern präzise Angaben zur Ausrichtung bzw. Lage der Einbauhilfe 100.

Ein Magnetometer als weiteres Beispiel für die Sensoreinheit 110 misst das Magnetfeld der Erde und kann zur Bestimmung der relativen Ausrichtung der Einbauhilfe 100 genutzt werden. In Kombination mit einem Beschleunigungssensor kann ein Magnetometer zur Berechnung der exakten Neigung der Einbauhilfe 100 relativ zur Horizontalen verwendet werden. Das Magnetometer ermöglicht hierbei die Ermittlung der Orientierung der Einbauhilfe 100 im Raum anhand des Erdmagnetfeldes.

In einem Beispiel wird eine Sensoreinheit 110 mehrere der oben genannten Sensoren kombinieren, um eine verbesserte und genauere Messung der Ausrichtung zu ermöglichen. Eine kombinierte Sensoreinheit 110 besteht beispielsweise aus einem Beschleunigungssensor, einem Gyroskop und einem Magnetometer. Diese Kombination erlaubt eine präzise Erfassung der Neigung sowie der Ausrichtung der Einbauhilfe 100 relativ zur Horizontalen.

Die Lage der Einbauhilfe 100, also die aktuelle Lage, die Soll-Lage und die Einbaulage, bezieht sich auf die räumliche Orientierung der Einbauhilfe 100 relativ zu einer definierten Referenzebene, beispielsweise der Horizontalen. Die Lage beschreibt wenigstens einen Winkel, den die Einbauhilfe 100 in Bezug auf diese Ebene einnimmt, ohne dabei die Position der Einbauhilfe 100 im Raum zu berücksichtigen. Die Lage wird durch den Neigungswinkel um eine oder mehrere Achsen charakterisiert, die durch die relative Ausrichtung der Einbauhilfe zur Schwerkraft bestimmt werden.

Die Lage kann insbesondere durch die folgenden Parameter beschrieben werden: 1) Den Neigungswinkel Pitch, der die Rotation der Einbauhilfe 100; 2) Den Rollwinkel Roll, welcher die Rotation der Einbauhilfe 100 um die Querachse oft als X-Achse bezeichnet angibt, und die Neigung der Einbauhilfe 100 in der Vorwärts- oder Rückwärtsrichtung beschreibt; und 3) Den Gierwinkel Yaw, welcher die Rotation der Einbauhilfe 100 um die Hochachse oft als Z-Achse bezeichnet beschreibt und die Drehung der Einbauhilfe in der Horizontalebene angibt.

Eine Steuereinheit 120 der Einbauhilfe 100 ist dazu eingerichtet, wenigstens ein Ausgangssignal O zu ermitteln. Das Ausgangssignal O wird in Abhängigkeit von der aktuellen Lage L der Einbauhilfe 100 im Raum und der Soll-Lage Lset der Einbauhilfe 100 im Raum insbesondere durch einen Vergleich der Größen miteinander ermittelt.

Zudem kann sie Soll-Lage Lset ein Kennfeld umfassen, das eine vorgegebene Kombination von Neigungswinkeln und Neigungswinkelbereichen als ausreichend für den garantierten Leerlauf umfasst.

Die Steuereinheit 120 umfasst wenigstens eine Prozessoreinheit und eine Speichereinheit mit einem darauf abgespeichertem, auf der Prozessoreinheit ausführbarem Computerprogrammprodukt. Das Computerprogrammprodukt ist dazu eingerichtet, die hier beschriebenen Verfahrensschritte auszuführen.

Eine Ausgabeeinheit 130 der Einbauhilfe 100 ist dazu eingerichtet, das Ausgangssignal O auszugeben, um den zumindest einen Grad der Übereinstimmung der Soll-Lage Lset mit der aktuellen Lage L und/oder die zumindest eine Lagekorrektur-Anweisung zum Erreichen der Soll-Lage Lset an einen Nutzer der Einbauhilfe 100 weiterzugeben.

Das Ausgangssignal O charakterisiert zumindest einen Grad der Übereinstimmung einer Soll-Lage Lset der Einbauhilfe 100 im Raum mit der aktuellen Lage L der Einbauhilfe 100 im Raum. Zusätzlich oder alternativ charakterisiert das Ausgangssignal O zumindest eine Lagekorrektur-Anweisung zum Erreichen der Soll-Lage Lset der Einbauhilfe 100 im Raum.

Im Falle der Übereinstimmung der Lagen L und Lset ist der Grad der Übereinstimmung 100%. Sind die Lagen L und Lset allerdings weit voneinander entfernt, beispielsweise 90°, so kann die Übereinstimmung 0% betragen. Diese Abbildung wird über das Ausgangssignal O erfasst und beispielsweise über eine LED-Anzeige an den Monteur ausgegeben.

Bei der Lagekorrektur-Anweisung kann es sich beispielsweise um eine Richtung handeln, die über das Ausgangssignal O beispielsweise als stilisierter Pfeil auf einem Display dargestellt wird.

Die Ausgabeeinheit 130 leitet das Ausgangssignal O also an eine weitere Einheit weiter oder gibt das Ausgangssignal O in einer für den Nutzer/Monteur/Schweißer verständlichen Form aus.

Des Weiteren ist eine Verbindungsvorrichtung 140 vorgesehen, um die Einbauhilfe 100 lösbar mit dem Prozessventilkörper 200 zu verbinden. Hierzu ist wenigstens eine mechanische Struktur vorgesehen, die an dem Prozessventilkörper 200 angreift. Eine Kopplung der Einbauhilfe 100 mit dem Prozessventilkörper 200 wird über die mechanische Struktur ausschließlich in einer oder zwei vorbestimmten Positionen zueinander ermöglicht.

Eine Eingabeeinheit 150 der Einbauhilfe ist dazu konfiguriert, die Soll-Lage Lset der Einbauhilfe 100 im Raum vorzugeben. Die Eingabeeinheit 150 kann unterschiedlich ausgebildet sein.

So umfasst die Eingabeeinheit 150 in einem Beispiel einen Leser 152, welcher dazu konfiguriert ist, Daten D eines in der Nähe des Lesers 152 befindlichen Tags 252, welcher insbesondere am Prozessventilkörper 200 angeordnet ist oder in einem vorab definierten Katalog von Prozessventilkörpern abgebildet ist, drahtlos auszulesen und in Abhängigkeit von den ausgelesenen Daten D, welche beispielsweise die Soll-Lage selbst oder eine Typ-Identifikation des Prozessventilkörpers umfasst, die Soll-Lage Lset für die Einbauhilfe 100 vorzugeben.

Der Leser kann als optischer Leser und der Tag als optisch erfassbarer Code, beispielsweise Barcode oder QR-Code ausgebildet sein.

In einem weiteren Beispiel ist der Leser 152 als RFID-Leser ausgebildet und der Tag ist ein RFID-Tag (RFID = Radio-Frequency Identification).

In einem ersten Beispiel ist der RFID-Leser 152 in die Einbauhilfe 100 integriert und beispielsweise mit einem farbigen, beispielsweise roten Punkt versehen, um die Einbauhilfe 100 in der richtigen Ausrichtung zu dem RFID-Tag an dem Prozessventilkörper 200 zu positionieren, um das Auslesen der Daten D zu starten.

In einem weiteren alternativen oder zusätzlichen Beispiel umfasst der RFID-Leser eine separate Komponente, beispielsweise einen RFID-Stift, mit dem die Daten D aus dem RFID-Tag des Prozessventilkörpers ausgelesen werden können.

Die Eingabeeinheit 150 umfasst in einem weiteren Beispiel eine Drahtlos-Schnittstelle 154, damit die Soll-Lage Lset, ausgehend von einem insbesondere tragbaren Kommunikations- und Rechengerät 300, drahtlos empfangen wird. Hierzu wird zuvor das Kommunikations- und Rechengerät 300 zur Eingabe oder zum Auslesen der Soll-Lage Lset betrieben.

In einem weiteren Beispiel ist die Eingabeeinheit 150 dazu konfiguriert, einen Bestätigungsbefehl B, so er empfangen wurde, weiterzuleiten und/oder zu generieren. Bei Vorliegen des Bestätigungsbefehls B wird die aktuelle Lage L der Einbauhilfe 100 im Raum als finale Einbaulage Lfin des Prozessventilkörpers 200 in einer Speichereinheit 198 abgespeichert und ist anschließend - insbesondere durch eine zentrale Einheit - auslesbar. Alternativ oder zusätzlich wird die finale Einbaulage Lfin, mittels der Ausgangseinheit 130, insbesondere mittels einer Drahtlos-Schnittstelle 132, 152, an eine entfernt angeordnete Einheit 400 gesendet.

Die entfernt angeordnete Einheit 400 dient zur Zusammenführung der finalen Einbaulagen der Prozessventilkörper der ganzen Prozessanlage.

In einem Beispiel wird zusätzlich zu der Einbaulage Lfin noch die Kennung bzw. der Name des Monteurs abgespeichert, um so Zugriff auf die verantwortlichen Monteure zu haben.

In einem Beispiel wird zusätzlich zu der Einbaulage Lfin noch das Datum und die Uhrzeit abgespeichert und mitgesendet.

In einem weiteren Beispiel wird gemeinsam mit der finalen Einbaulage Lfin die Kennung des Prozessventilkörpers oder die Typenkennung des Prozessventilkörpers übermittelt. Vorteilhaft können so die Kennung des Prozessventilkörpers bzw. die Typenkennung mit den Planungsdaten der Prozessanlage abgeglichen bzw. die Planungsdaten ergänzt werden.

Die Eingabeeinheit 150 hat einen Taster 156, welcher bei manueller Betätigung, insbesondere in einem Betriebsmodus, den Bestätigungsbefehl B erzeugt.

Bei den Schweißprozessen entstehen hohe Temperaturen, die über die Metalllegierung des Prozessventilkörpers 200 an einen Temperatursensor 158 weitergegeben werden. Der Temperatursensor 158 erfasst eine Temperatur T der Einbauhilfe 100 oder die Temperatur T im Bereich des Prozessventilkörpers 200. Bei Überschreiten eines vorgegebenen Temperatur-Schwellwerts durch die vom Temperatursensor 158 erfasste Temperatur T wird der Bestätigungsbefehl B generiert.

Der Bestätigungsbefehl B impliziert eine Bestätigung der gemessenen aktuellen Lage bzw. Ist-Lage L als finale Lage Lfin des Prozessventilkörpers 200.

Die Eingabeeinheit 150 empfängt in einem Beispiel den Bestätigungsbefehl B mittels einer Drahtlosschnittstelle 154 drahtlos von dem insbesondere tragbaren Kommunikations- und Rechengerät 300.

Die Ausgabeeinheit 130 umfasst eine weitere Drahtlos-Schnittstelle 132, welche so konfiguriert ist, um das Ausgabesignal O, das den Grad der Übereinstimmung der Soll-Lage Lset mit der aktuellen Lage L und/oder die Lagekorrektur-Anweisung zum Erreichen der Soll-Lage Lset der Einbauhilfe 100 im Raum indiziert, an das insbesondere tragbares Kommunikations- und Rechengerät 300 zu senden.

Die Drahtlos-Schnittstellen 154 und 132 können selbstverständlich auch als eine bidirektionale Drahtlos-Schnittstelle gemeinsam ausgeführt werden.

Beispiele für die Drahtlos-Schnittstellen 154 und 132 sind Bluetooth-Schnittstellen, Wireless LAN-Schnittstellen.

Das Kommunikations- und Rechengerät 300 ist beispielsweise ein Smartphone, ein Tablet oder ein tragbarer PC, auf welchem eine Applikation 310 läuft, welche entsprechend den hier beschriebenen Verfahrensschritten eingerichtet ist.

Die mit dem Kommunikations- und Rechengerät 300 durchgeführten Aktionen und die empfangenen Ausgangsdaten O und/oder die Einbaulage Lfin an die weitere Einheit 400 weiterleiten.

Die Ausgabeeinheit 130 umfasst eine Mehrzahl von in einer gedachten Fläche angeordneten Lichtquellen 134a-z und/oder ein Display 136. Die Ausgabeeinheit 130 ist in diesem Beispiel dazu konfiguriert, um in Abhängigkeit von dem wenigstens einen Ausgangssignal O den Grad der Übereinstimmung der Soll-Lage Lset mit der aktuellen Lage L und/oder die Lagekorrektur-Anweisung zum Erreichen der Soll-Lage Lset der Einbauhilfe 100 im Raum durch unterschiedliche Farben und/oder unterschiedliche Lichtintensitäten der einzelnen Lichtquellen 134a-z bzw. der Pixel des Displays 136 anzuzeigen.

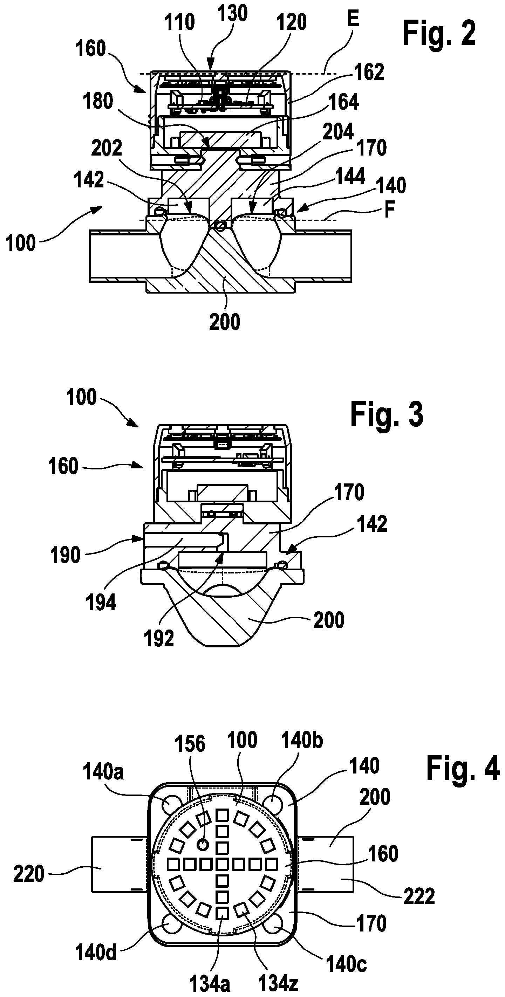

Figur 2 zeigt in einem Schnitt ein Beispiel der Einbauhilfe 100, welche an einem Prozessventilkörper 200 angeordnet ist. Die Sensoreinheit 110, die Steuereinheit 120, die Ausgabeeinheit 130, und die Eingabeeinheit 150 sind Teil eines Hauptmoduls 160. Ein Adaptermodul 170 ist derart konfiguriert, um mittels der Verbindungsvorrichtung 140 mit dem Prozessventilkörper 200 verbunden zu werden. Das Adaptermodul 170 verbindet also das Hauptmodul 160 mit dem Prozessventilkörper 200.

Das Hauptmodul 160 umfasst ein Gehäuse 162, um die Steuereinheit 120 und die Sensoreinheit 110 aufzunehmen. Zudem ist in dem Gehäuse 162 ein elektrischer Akkumulator 164 vorhanden, welcher für die elektrische Energieversorgung der Einbauhilfe 100 sorgt.

Über eine Schnittstelle 180, bei der vorliegend Stifte des Hauptmoduls 160 in Ausnehmungen des Adaptermoduls 170 greifen, werden das Hauptmodul 160 und das Adaptermodul 170 zueinander festgelegt.

Die Verbindungsvorrichtung 140 greift beispielsweise am Befestigungsflansch des Prozessventilkörpers 200 an. Die gedachte Fläche E, welcher die Anordnung bzw. Lichtaustrittsflächen der Lichtquellen 134a-z bzw. des Displays 136 folgen ist parallel zu einer gedachten Fläche F, welche durch den Befestigungsflansch des Prozessventilkörpers 200 verläuft. Damit ist für den Monteur bzw. Schweißer die Anordnung und das Ablesen der Ausgabeeinheit 130 einfach nachvollziehbar und die Haptik wird verbessert.

Die Verbindungsvorrichtung 140 umfasst wenigstens einen Dichtabschnitt 142, 144, welcher derart eingerichtet ist, dass wenigstens eine Öffnung 202, 204 eines Fluidkanals des Prozessventilkörpers 200 durch den zugeordneten Dichtabschnitt 142, 144 abgedichtet ist. Beispielsweise können elastomere O-Ringe bzw. Dichtungen für die Dichtabschnitte 142, 144 verwendet werden, um eine Dichtheit nach innen bzw. nach außen herzustellen.

Figur 3 zeigt die Einbauhilfe 100 und den Prozessventilkörper 200 in einer weiteren Schnittansicht, lotrecht zum Schnitt der Figur 2.

Die Einbauhilfe 100 umfasst im Bereich des Adaptermoduls 170 einen Schutzgasanschluss 190, welcher über einen Fluidkanal 194 mit einem Schutzgasauslass 192, welcher sich innerhalb des Dichtabschnitts 142, 144 befindet, verbunden ist.

Für die Dichtheitsprüfung wird der Schutzgasanschluss 190 mit einem Deckel verschlossen.

Figur 4 zeigt eine Draufsicht auf die Einbauhilfe 100 und den Prozessventilkörper 200. Die Verbindungsvorrichtung 140 der Einbauhilfe 100 weist die mechanischen Strukturen 140a-d auf, mittels welchen die Kopplung der Einbauhilfe 100 in zwei Positionen zueinander möglich ist.

Im gezeigten Beispiel sind die Strukturen 140a-d Durchgangsöffnungen, die korrespondierend zu einem Vierloch-Muster des Befestigungsflansches des Prozessventilkörpers 200 ausgebildet sind. Bei dem Vierloch-Muster sind beispielsweise die längs des Fluidkanals des Prozessventilkörpers 200 angeordneten Löcher weiter voneinander beabstandet als die quer angeordneten. Dies führt dazu, dass die Einbauhilfe 100 nur in zwei Positionen an dem Prozessventilkörper 200 angeordnet werden kann.

Die Ausgabeeinheit 130 umfasst die Mehrzahl von in der gedachten Fläche, hier der parallel zur Zeichenebene, angeordneten Lichtquellen 134a-z. Die Steuereinheit steuert die Lichtquellen 134a-z an. Ein erster Teil der Lichtquellen ist entlang einer gedachten Kreislinie angeordnet. Innerhalb der gedachten Kreislinie ist ein zweiter Teil der Lichtquellen kreuzförmig angeordnet.

Der Taster 156 schaltet bei ausgeschalteter Einbauhilfe 100 diese an, versetzt sie also in den Betriebsmodus.

Im Folgenden wird beispielhaft die Verwendung der Einbauhilfe 100 beschrieben. Zunächst wird das Adaptermodul mit den gleichen Befestigungsmitteln wie Schrauben und Muttern an dem Prozessventilkörper angeordnet. Die Befestigungsmittel sind also diejenigen, die auch für die Antriebsmontage verwendet werden. Vorliegend wird das Adaptermodul 170 der Einbauhilfe 100 über die vier Löcher verschraubt. Zuvor wird die Dichtung korrekt in das Adaptermodul 170 eingelegt. Anschließend ist das Adaptermodul 170 mit dem Prozessventilkörper 200 verbunden. Das Hauptmodul 160 der Einbauhilfe 100 wird über den Taster 156 an der Oberseite durch Betätigung länger als zwei Sekunden eingeschaltet. Die LED-Sichtanzeige mit den Lichtquellen 134a-z leuchtet kurz gelb und anschließend dauerhaft weiß. Dann wird das Hauptmodul 160 mit dem Smartphone verbunden. Das Hauptmodul 160 wird über eine Schnelladaption bzw. Schnittstelle 180 auf das Adaptermodul 170 gesteckt. Vorliegend sind zwei Richtungen bzw. Orientierungen des Hauptmoduls 160 zum Prozessventilkörper 200 möglich. Nun wird der Prozessventilkörper 200 mit der mit ihm verbundenen Einbauhilfe 100 so ausgerichtet, dass alle Lichtquellen 134a-z LEDs grün leuchten. Damit wird das Erreichen der Soll-Lage Lset indiziert. Nun wird der Prozessventilkörper 200 fixiert und Schutzgas in den jeweiligen Schutzgasanschluss des Adaptermoduls 170 eingeleitet. Nun werden die Anschlüsse 220 und 222 mit den zugeordneten Rohren der Prozessanlage verschweißt. Nach dem Verschweißen kann über den Taster 156 die Einbaulage bestätigt werden. Nach dem Einschweißen wird die Einbauhilfe 100 über die Schnelladaption entfernt.

Nach dem Koppeln des Smartphones mit der Einbauhilfe 100 öffnet man die zugeordnete Applikation auf dem Smarthone. Nach erfolgreicher Verbindung blinken die kreisförmig angeordneten Lichtquellen dreimal blau. In der Applikation werden der Soll-Winkel, der aktuelle Winkel und der Ladezustand der Einbauhilfe 100 angezeigt. Der Soll-Winkel ist veränderbar über einen Slider oder durch Anwählen eines Ventilkörper-Typs oder einer Kombination von Ventilkörper-Typ und Rohr. Nachdem der aktuelle Winkel dem Soll-Winkel entspricht, also eine Ausrichtung stattgefunden hat, wird der Prozessventilkörper 200 mit den Rohren verschweißt. Nun kann in der Applikation eine Funktion "Trennen" angewählt werden, um das Smartphone von der Einbauhilfe 100 zu trennen. Nach dem Trennen blinkten die kreisförmig angeordneten Lichtquellen dreimal violett und anschließend leuchten die Lichtquellen dauerhaft weiß.

Die Lage-Korrektur-Anweisung wird während des Ausrichtens des Prozessventilkörpers 200 benötigt. Hierzu zeigen die kreuzförmig angeordneten Lichtquellen im Stile einer Wasserwaage an, wie die die Soll-Lage erreicht werden kann. So wird beispielsweise nur eine Lichtquelle in einer Linie angeschaltet, um die jeweilige Ist-Lage bzw. aktuellen Lage in dieser Achse im Vergleich zur Soll-Lage anzuzeigen. Die Lichtquellen der jeweiligen Kreuzachse werden so betrieben, dass die Soll-Lage dann erreicht ist, wenn man über Lageveränderungen die mittlere Lichtquelle erreicht, d.h. dass diese ein Lichtsignal von sich gibt. Je weiter die leuchtende Lichtquelle von der mittleren Lichtquelle entfernt ist, desto weiter ist man von der Soll-Lage entfernt.

## Patentansprüche

1. Eine Einbauhilfe (100) für Prozessventilkörper (200), wobei die Einbauhilfe (100) umfasst:
eine Sensoreinheit (110), welche dazu eingerichtet ist, eine aktuelle Lage (L) der Einbauhilfe (100) im Raum zu ermitteln;
eine Steuereinheit (120), welche dazu eingerichtet ist, wenigstens ein Ausgangssignal (O) zu ermitteln, welches zumindest einen Grad der Übereinstimmung einer Soll-Lage (Lset) der Einbauhilfe (100) im Raum mit der aktuellen Lage (L) der Einbauhilfe (100) im Raum charakterisiert und/oder welches zumindest eine Lagekorrektur-Anweisung zum Erreichen der Soll-Lage (Lset) der Einbauhilfe (100) im Raum charakterisiert, in Abhängigkeit von der aktuellen Lage (L) der Einbauhilfe (100) im Raum und der Soll-Lage (Lset) der Einbauhilfe (100) im Raum; und
eine Ausgabeeinheit (130), welche dazu eingerichtet ist, das Ausgangssignal (O) auszugeben, um den zumindest einen Grad der Übereinstimmung der Soll-Lage (Lset) mit der aktuellen Lage (L) und/oder die zumindest eine Lagekorrektur-Anweisung zum Erreichen der Soll-Lage (Lset) an einen Nutzer der Einbauhilfe (100) weiterzugeben.

2. Die Einbauhilfe (100) gemäß dem Anspruch 1, wobei die Einbauhilfe (100) umfasst:
eine Verbindungsvorrichtung (140) zur lösbaren mechanischen Verbindung mit dem Prozessventilkörper (200), wobei die Verbindungsvorrichtung (140) wenigstens eine mechanische Struktur umfasst, die eine Kopplung der Einbauhilfe (100) mit dem Prozessventilkörper (200) ausschließlich in einer oder zwei vorbestimmten Positionen zueinander ermöglicht.

3. Die Einbauhilfe (100) gemäß dem Anspruch 1 oder 2, wobei die Einbauhilfe (100) umfasst:
eine Eingabeeinheit (150), welche dazu eingerichtet ist, die Soll-Lage (Lset) der Einbauhilfe (100) im Raum vorzugeben.

4. Die Einbauhilfe (100) gemäß dem Anspruch 3, wobei die Eingabeeinheit (150) einen Leser (152) umfasst, welcher dazu eingerichtet ist, Daten (D) eines in der Nähe des Lesers (152) befindlichen Tags (252), welcher insbesondere am Prozessventilkörper (200) angeordnet ist oder in einem vorab definierten Katalog von Prozessventilkörpern abgebildet ist, drahtlos auszulesen und in Abhängigkeit von den ausgelesenen Daten (D) die Soll-Lage (Lset) für die Einbauhilfe (100) vorzugeben.

5. Die Einbauhilfe (100) gemäß einem der Ansprüche 2 bis 4, wobei die Eingabeeinheit (150) eine Drahtlos-Schnittstelle (154) umfasst, um die Soll-Lage (Lset) von einem insbesondere tragbaren Kommunikations- und Rechengerät (300) drahtlos zu empfangen.

6. Die Einbauhilfe (100) gemäß einem der vorigen Ansprüche, wobei die Eingabeeinheit (150) dazu eingerichtet ist, einen Bestätigungsbefehl (B) weiterzuleiten oder zu generieren, wobei die Steuereinheit (120) dazu eingerichtet ist, um bei Vorliegen des Bestätigungsbefehls (B) die aktuelle Lage (L) der Einbauhilfe (100) im Raum als finale Einbaulage (Lfin) des Prozessventilkörpers (200) in einer Speichereinheit (198) abzuspeichern und/oder mittels der Ausgangseinheit (130) , insbesondere mittels einer Drahtlos-Schnittstelle (132, 152), an eine entfernt angeordnete Einheit (400) zu senden.

7. Die Einbauhilfe (100) gemäß dem Anspruch 6, wobei die Eingabeeinheit (150) einen Taster (156) umfasst, welcher bei manueller Betätigung den Bestätigungsbefehl (B) erzeugt.

8. Die Einbauhilfe (100) gemäß dem Anspruch 6 oder 7, wobei die Eingabeeinheit (150) einen Temperatursensor (158) umfasst, welcher eine Temperatur (T) der Einbauhilfe (100) oder im Bereich des Prozessventilkörpers (200) erfasst, wobei die Eingabeeinheit (150) dazu eingerichtet ist, um bei Überschreiten eines vorgegebenen Temperatur-Schwellwerts durch die vom Temperatursensor (158) erfasste Temperatur (T) den Bestätigungsbefehl (B) zu generieren.

9. Die Einbauhilfe (100) gemäß dem Anspruch 2 und 6, wobei die Eingabeeinheit (150) den Bestätigungsbefehl (B) mittels einer Drahtlosschnittstelle (154) drahtlos von einem insbesondere tragbaren Kommunikations- und Rechengerät (300) empfängt.

10. Die Einbauhilfe (100) gemäß einem der vorigen Ansprüche, wobei die Ausgabeeinheit (130) eine Drahtlos-Schnittstelle (132) aufweist, welche dazu eingerichtet sind, um das Ausgabesignal (O), das den Grad der Übereinstimmung der Soll-Lage (Lset) mit der aktuellen Lage (L) und/oder die Lagekorrektur-Anweisung zum Erreichen der Soll-Lage (Lset) der Einbauhilfe (100) im Raum indiziert, an ein insbesondere tragbares Kommunikations- und Rechengerät (300) zu senden.

11. Die Einbauhilfe (100) gemäß einem der vorigen Ansprüche, wobei die Ausgabeeinheit (130) eine Mehrzahl von in einer gedachten Fläche angeordneten Lichtquellen (134a-z) und/oder ein Display (136) aufweist, welche dazu eingerichtet sind, um in Abhängigkeit von dem wenigstens einen Ausgangssignal (O) den Grad der Übereinstimmung der Soll-Lage (Lset) mit der aktuellen Lage (L) und/oder die Lagekorrektur-Anweisung zum Erreichen der Soll-Lage (Lset) der Einbauhilfe (100) im Raum durch Farben und/oder Lichtintensitäten anzuzeigen.

12. Die Einbauhilfe (100) gemäß einem der Ansprüche 2 bis 11, wobei die Sensoreinheit (110), die Steuereinheit (120) und die Ausgabeeinheit (130), und insbesondere die Eingabeeinheit (150), einem Hauptmodul (160) zugeordnet sind, wobei ein Adaptermodul (170) die Verbindungsvorrichtung (140) umfasst, und wobei das Adaptermodul (170) das Hauptmodul (160) mit dem Prozessventilkörper (200) verbindet.

13. Die Einbauhilfe (100) gemäß einem der vorigen Ansprüche, wobei die Verbindungsvorrichtung (140) wenigstens einen Dichtabschnitt (142, 144) umfasst, welche derart eingerichtet ist, dass wenigstens eine Öffnung (202, 204) eines Fluidkanals des Prozessventilkörpers (200) durch den zugeordneten Dichtabschnitt (142, 144) abgedichtet ist.

14. Die Einbauhilfe (100) gemäß einem der vorigen Ansprüche, wobei die Einbauhilfe (100) einen Schutzgasanschluss (190) aufweist, welcher über einen Fluidkanal (194) mit einem Schutzgasauslass (192), welcher sich innerhalb des Dichtabschnitts (142, 144) befindet, verbunden ist.

15. Ein Verfahren zum Betreiben einer Einbauhilfe (100) für Prozessventilkörper (200), wobei das Verfahren umfasst:
Ermitteln, mittels einer Sensoreinheit (110), einer aktuellen Lage (L) der Einbauhilfe (100) im Raum;
Ermitteln, mittels einer Steuereinheit (120), wenigstens eines Ausgangssignals (O), welches zumindest einen Grad der Übereinstimmung einer Soll-Lage (Lset) der Einbauhilfe (100) im Raum mit der aktuellen Lage (L) der Einbauhilfe (100) im Raum charakterisiert und/oder welches zumindest eine Lagekorrektur-Anweisung zum Erreichen der Soll-Lage (Lset) der Einbauhilfe (100) im Raum charakterisiert, in Abhängigkeit von der aktuellen Lage (L) der Einbauhilfe (100) im Raum und der Soll-Lage (Lset) der Einbauhilfe (100) im Raum; und
Ausgeben, mittels einer Ausgabeeinheit (130), des Ausgangssignals (O), um den zumindest einen Grad der Übereinstimmung der Soll-Lage (Lset) mit der aktuellen Lage (L) und/oder die zumindest eine Lagekorrektur-Anweisung zum Erreichen der Soll-Lage (Lset) an einen Nutzer der Einbauhilfe (100) weiterzugeben.

16. Das Verfahren gemäß dem Anspruch 15, welches zum Betreiben der Einbauhilfe (100) gemäß einem der Ansprüche 2 bis 14 ausgebildet ist.
